Europäisches Patentamt

European Patent Office

Office européen des brevets

(19)

(11) Numéro de publication: **0 240 383 B1**

## FASCICULE DE BREVET EUROPEEN

(12)

(45) Date de publication de fascicule du brevet:
07.08.91

(51) Int. Cl.5: **H04N 7/13**

(21) Numéro de dépôt: 87400401.3

(22) Date de dépôt: 24.02.87

(54) **Procédé de compression d'images numériques et dispositif de mise en oeuvre d'un tel procédé.**

(30) Priorité: 28.02.86 FR 8602872

(43) Date de publication de la demande:
07.10.87 Bulletin 87/41

(45) Mention de la délivrance du brevet:
07.08.91 Bulletin 91/32

(84) Etats contractants désignés:
CH DE FR GB IT LI NL

(56) Documents cités:
EP-A- 0 097 858
EP-A- 0 117 161

RECONNAISSANCE DES FORMES ET TRAITE-
MENT DES IMAGES, Congrès AFCET-IRIA,
21-23 février 1978, Châtenay - Malabry, pages
699-714, Institut de Recherche d'informatique et d'automatique, Paris, FR; G.E. LO-
WITZ: "Compression des données images
par reconnaissance des formes et clustering"

(73) Titulaire: THOMSON-CSF
51, Esplanade du Général de Gaulle
F-92800 Puteaux(FR)

(72) Inventeur: Lievre, Gérard
THOMSON-CSF SCPI 19, avenue de Messine
F-75008 Paris(FR)

(74) Mandataire: Guérin, Michel et al
THOMSON-CSF SCPI
F-92045 PARIS LA DEFENSE CEDEX 67(FR)

ICASSP 85 PROCEEDINGS, 26-29 mars 1985, Tampa, Florida, sponsorisé par the Institute of Electrical and Electronics Engineers, Acoustics, Speech and Signal Processing Society, vol. 1 des 4, pages 133-136, IEEE International Conference on Acoustics, Speech, and Signal Processing, New York, US; A. GERSHO et al.: "Adaptive vector quantization by progressive codevector replacement"

1981 IEEE INTERNATIONAL SYMPOSIUM ON CIRCUITS AND SYSTEMS PROCEEDINGS, 27-29 avril 1981, Chicago, Illinois, vol. 1 des 3, pages 92-96, sponsorisé par the IEEE Circuits and Systems Society, New York, US; M. METWALI et al.: "Stored patterns transmission of digital video signals"

NACHRICHTENTECHNISCHE ZEITSCHRIFT N.T.Z., vol. 27, no. 5, mai 1974, pages 176-181, Berlin, DE; F.J. IN DER SCHMITTEN: "Informationsreduzierende Quellencodierung von Farbbildsignalen auf der Basis optischer Valenzklassen"

## Description

L'invention concerne un procédé de compression d'images numériques et plus particulièrement un procédé de compression d'images numériques destinées à être télévisées. Elle concerne également un dispositif de mise en oeuvre d'un tel procédé.

Les images de télévision sont composées de points élémentaires (pixels) régulièrement répartis dans le plan de l'image auxquels sont attribuées une ou plusieurs qualités radiométriques dénommées composantes.

Ces composantes peuvent être par exemple les mesures des radiométries $R_i$, $V_i$, $B_i$ de chaque pixel dans le cas de trois canaux rouge, vert, bleu pour une image couleur ou les mesures des radiométries de chaque pixel dans le cas d'un seul canal pour des images en noir et blanc.

La numérisation d'une image pour son traitement ou sa transmission consiste classiquement à coder chaque point élémentaire en un nombre B de bits. Le volume numérique total représentatif d'une image est égal N x M x B bits, M étant le nombre de lignes de l'image et N le nombre de points élémentaires par ligne.

Dans certaines applications, il est impératif d'utiliser des mémoires de taille réduite. Il est donc nécessaire de réduire le plus possible le volume des informations numériques qui doivent être stockées dans ces mémoires.

Pour cela, des techniques telles que le codage différentiel, ou les transformations orthogonales ou le codage statistique ont été expérimentées mais sans résultat très satisfaisant. En effet, ces techniques ne permettent pas d'obtenir un taux de compression important sans dégradation des images après reconstitution.

Par ailleurs, il est connu que pour obtenir un taux de compression de l'image, on regroupe les pixels selon un critère prédéterminé dans des classes, le nombre de classes est inférieur au nombre de combinaisons des bits du codage d'un pixel afin d'obtenir une compression.

Le document EP-A-117.161 décrit un procédé de compression d'image numérique de ce type.

Il est également connu que pour obtenir une compression, l'image soit découpée fictivement en fenêtre et que le nombre de classes soit fixé a priori pour chaque fenêtre. Chaque classe est identifiée par une valeur prédéterminée. L'application d'un critère de regroupement à chaque pixel permet d'affecter ceux-ci à l'une de ces classes. Lorsque la totalité des pixels d'une fenêtre est classée, il est habituel d'effectuer le calcul d'un vecteur, par exemple, par calcul du barycentre pour chaque classe, de manière à identifier chaque classe par un nouveau vecteur pour améliorer la précision.

Ce type d'analyse de l'image reste malgré tout inadapté pour certaines applications et fastidieux. En effet le traitement fenêtre par fenêtre ne se justifie pas pour toutes les applications notamment pour des applications dans lesquelles les images sont peu fournies en nuances. Par ailleurs, ce traitement nécessite une analyse antérieure de l'image afin de déterminer chaque vecteur qui va permettre d'identifier une classe. En effet, cette étude préliminaire permet de déterminer les valeurs radiométriques initiales qui servent à créer chaque classe.

La présente invention permet de remédier à ces inconvénients et propose pour cela un procédé de compression d'images numériques dans lequel l'identification de chaque classe s'effectue au cours de l'analyse de l'image.

La présente invention a particulièrement pour objet un procédé de compression d'images numériques, tel que défini par la revendication 1.

La présente invention a également pour objet un dispositif de mise en oeuvre du procédé, tel que défini par la revendication 10.

L'invention sera mieux comprise à l'aide de la description détaillée faite à titre d'exemple non limitatif et illustrée par :
- la figure 1 sur laquelle sont développées les étapes du procédé selon l'invention et par ;

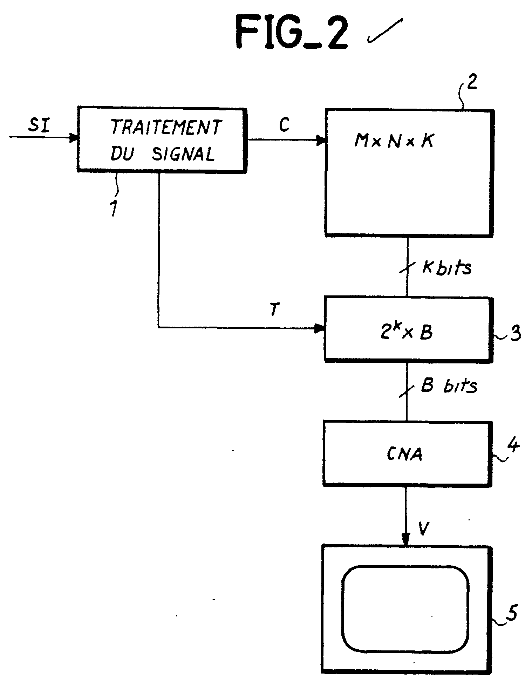

- la figure 2 qui représente un dispositif de mise en oeuvre du procédé selon l'invention.

La présente invention concerne donc la réduction du volume d'informations nécessaires à la représentation d'images numérisées monochromes ou couleurs.

Dans une image numérique définie par M lignes, N points par ligne, si le vecteur représentant chaque pixel (ce vecteur pouvant être constitué par une composante, ou par la moyenne des composantes radiométriques) est codé sur B bits, alors l'image occupe un volume de M x N x B bits. Le codage sur B bits permet d'obtenir $2^B$ valeurs définissant une image. Le nombre de ces valeurs peut être réduit sans toutefois détériorer la qualité de l'image. Pour cela, le procédé consiste à fixer un nombre $2^K$ de classes dans lesquelles vont être répartis les vecteurs qui répondent au critère d'appartenance à la classe. Le nombre K est choisi inférieur à B. L'image comprimée est associée à une table de transcodage de $2^K$ x B bits. Chaque pixel est donc identifié par un code sur K bits qui permet d'identifier à la classe à laquelle il appartient, la valeur radiométrique de la classe étant codée sur B bits.

L'image ainsi transformée occupe un volume d'informations numériques de M x N x K + $2^K$ x B bits. Le facteur de compression de l'information qui est égal à M x N x B/[M x N x K + $2^K$ x B], est de l'ordre de six pour M = N = 1024, B = 24 et K = 4.

Le procédé consiste à créer les classes pendant l'analyse en les identifiant, une classe étant créée chaque fois qu'un point n'appartient pas aux classes déjà créées.

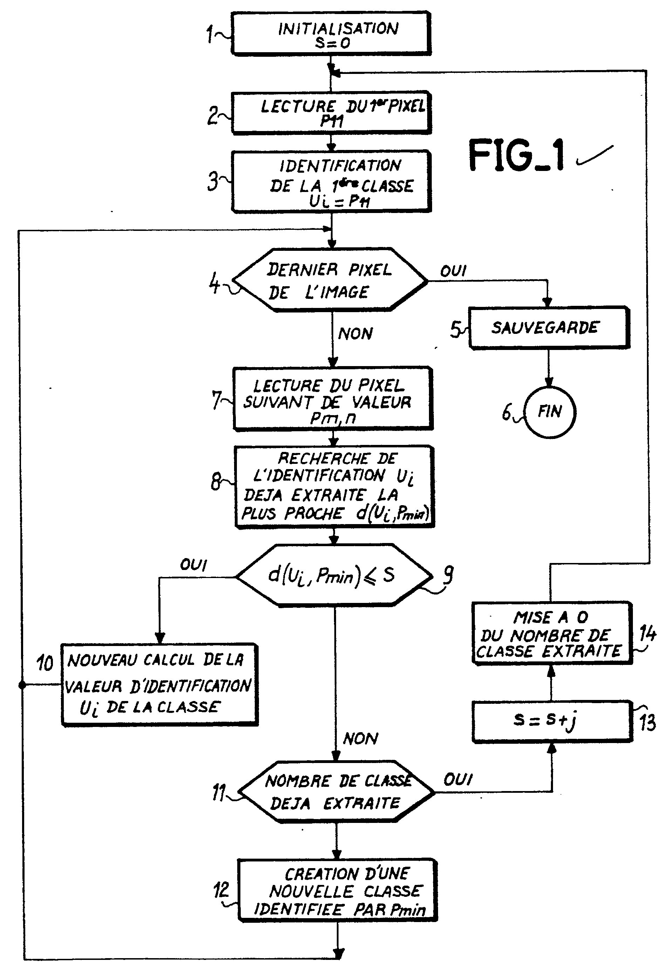

Sur la figure 1 on a représenté les différentes étapes du procédé.

Dans ce procédé on utilise un paramètre S qui évolue de manière à déterminer la frontière de chaque classe pour le nombre de classe que l'on s'est fixé. Ce paramètre S représente, le rayon d'une classe autour de la valeur radiométrique $U_i$ qui la représente. Ce rayon dépend du nombre de classes maximum que l'on s'autorise. Plus le nombre de classe est grand, plus le rayon est petit.

On a défini par $P_{m,n}$ la valeur numérique d'un vecteur correspondant à un pixel.

On a également défini par $U_i$, la valeur numérique du $i^{ième}$ vecteur identifiant une $i^{ième}$ classe.

Le critère de proximité permettant de regrouper les pixels dans une classe donnée est par exemple la distance Euclidienne définie en monochrone par l'expression:

$$d(U_i, P_{m,n}) = |U_i - P_{m,n}|$$

Dans le cas d'images couleurs, l'expression de la distance devient:

$$|d(U_i, P_{m,n})|^2 = |(R_i - R_{m,n})|^2 + (V_i - V_{m,n})^2 + |(B_i - B_{m,n})|^2 \text{ ou}$$

$R_i$, $V_i$, $B_i$ sont les valeurs numériques des trois composantes déterminées pour la classe $U_i$; $R_{m,n}$, $V_{m,n}$, $B_{m,n}$ sont les valeurs numériques des trois composantes du pixel testé.

Le procédé contient les étapes numérotées 1 à 14 :

1- à l'initialisation du procédé, le paramètre S est nul ;

2 - on procède à une lecture du premier pixel $P_{11}$ ;

3 - on identifie la première classe par la valeur du premier pixel ;

4 - on procède à un test pour savoir s'il s'agit du dernier pixel de l'image ;

5 - il s'agit du dernier pixel, on procède à une sauvegarde des radiométries des pixels et des radiométries des classes créées ;

6 - fin de traitement et transmission du signal comprimé pour reconstituer l'image ;

7 - il ne s'agit pas du dernier pixel, on lit le pixel suivant de valeur $P_{m,n}$ ;

8 - on recherche l'identification $U_i$ déjà extraite la plus proche par le calcul de la distance $d(U_i, P_{m,n})$ ;

9 - on procède à une comparaison entre cette distance d et le paramètre S ;

10 - d est inférieur ou égal à S, on introduit le pixel dans la classe $U_i$, et on recalcule la valeur d'identification $U_i$ de cette classe ;

11 - d est supérieur à S, il faut créer une nouvelle classe, on teste pour savoir si le nombre de classes déjà extraites est supérieur ou égal à $2^K$ ;

12 - le nombre de classe est inférieur à $2^K$, on crée une nouvelle classe, identifiée par la valeur du pixel lu $P_{m,n}$ et on réitère à partir de la $4^{ème}$ étape ;

13 - le nombre de classe est égal à $2^K$, il ne faut pas créer de nouvelle classe, on incrémente le paramètre S, tel que S = S + j ;

14 - on effectue une mise à zéro du nombre de classes extraites et on réitère à partir de l'étape 2.

Le paramètre S évolue par incrémentation d'une valeur j qui représente un multiple du plus petit incrément possible entre deux représentations numériques de pixels. Si on considère une représentation des valeurs des pixels par des nombres entiers on peut prendre j = 1.

Chaque fois que la distance entre une valeur $P_{m,n}$ et la valeur $U_i$ déjà extraite la plus proche est inférieure ou égale au paramètre S en cours, la valeur $P_{m,n}$ du pixel appartient à cette classe. On recalcule l'identification $U_i$ de cette classe par l'expression suivante :

$$(U_i)_{t+1} = \frac{t \times (U_i)_t + P_{m,n}}{t + 1}$$

où t représente le nombre de pixels ayant été classé dans cette classe avant le test en cours et $(U_i)_t$ la valeur identifiant la classe par les t pixels.

Cette nouvelle valeur correspond simplement à une moyenne arithmétique des valeurs des pixels ayant servi à identifier la classe à l'instant considéré.

Lorsque la distance est supérieure au paramètre S en cours, cela signifie qu'il faut créer une nouvelle classe. Or avant de créer une nouvelle classe, il faut s'assurer que le nombre de classes que l'on s'autorise n'est pas atteint. Si ce nombre est atteint, il ne faut plus créer de classe, mais incrémenter S. Si le nombre n'est pas atteint on crée une nouvelle classe et on sauvegarde toutes les valeurs ainsi classées dès qu'il n'y a plus de pixel à analyser.

Le dispositif de mise en oeuvre du procédé comprend un organe de traitement 1 du signal numérique SI, ce signal représentant le codage numérique d'une image télévisée.

L'organe de traitement 1 permet, après avoir regroupé tous les pixels dans les $2^K$ classes qui ont été créées, de remplacer la valeur de chaque pixel de l'image, définie sur B bits, par le code sur K bits identifiant la classe la plus proche. Le signal C délivré par l'organe 1 et qui correspond à l'image ainsi traitée, est stockée par exemple dans une mémoire image 2, de $M \times N \times K$ bits, dans laquelle les données représentent l'image codée sur K bits par pixel, et dans une mémoire $2^K \times B$ bits correspondant à une table de transcodage qui représente l'image (codée sur B bits) et réduite à $2^K$ valeurs radiométriques et qui est visualisée.

Le signal lu dans la mémoire 3 est converti par un convertisseur numérique analogique 4 pour transformer le signal en signal analogique, ce signal étant le signal vidéo V qui est visualisé sur l'écran de télévision 5.

Dans cette réalisation particulière, le traitement est effectué par un calculateur programmé à cette fin. Le calculateur est par exemple un microprocesseur 68000 de THOMSON-CSF.

## Revendications

1. Procédé de compression d'image numérique, l'image étant constituée par un ensemble de pixels, le procédé consistant à regrouper les pixels dans des classes ($U_i$) dont le nombre ($2^K$) est prédéterminé et étant caractérisé par le fait que la frontière de chacune des classes est définie par un même paramètre S ;
et qu'il consiste à tester chaque pixel pour :
   - le ranger dans une classe déjà créée s'il appartient à une telle classe ;
   - dans le cas contraire où il n'appartient pas à une classe déjà créée :
     . soit créer une classe tant que le nombre de classes déjà créées n'est pas égal au nombre prédéterminé ($2^K$) ;
     . soit incrémenter le paramètre S, modifiant ainsi les frontières des classes, puis retester les pixels déjà testés pour les regrouper dans les classes modifiées, lorsque le nombre de classes déjà créées est égal au nombre prédéterminé ($2^K$).

2. Procédé selon la revendication 1, caractérisé par le fait que les valeurs des classes sont obtenues à partir des valeurs radiométriques des pixels les constituant et sont stockées pour être utilisées à la reconstitution de l'image.

3. Procédé selon l'une des revendications précédentes, caractérisé par le fait que le paramètre S est nul lors de l'initialisation du procédé et que la valeur du premier pixel de l'image permet d'identifier une première classe.

4. Procédé selon la revendication 1, caractérisé par le fait qu'un pixel est affecté à une classe donnée dès lors que la distance d avec cette classe est inférieure au paramètre S en cours.

5. Procédé selon la revendication 1, caractérisé par le fait que la lecture d'un pixel déclenche la création d'une nouvelle classe dès lors que sa distance d avec la classe la plus proche est supérieure ou égale au paramètre S en cours et que le nombre de classe prédéterminé n'est pas atteint.

6. Procédé selon la revendication 1, caractérisé par le fait que la lecture d'un pixel déclenche une incrémentation du paramètre S d'une valeur j et une mise à zéro du nombre de classes créées, dès lors que la distance d avec la classe la plus proche est supérieure au paramètre S avant incrémentation et que le nombre de classes prédéterminé est atteint.

7. Procédé selon la revendication 2, caractérisé par le fait que lorsqu'une nouvelle classe est créée, la valeur qui lui est affectée est la valeur ($P_{m,n}$) du pixel lu.

8. Procédé selon la revendication 2, caractérisé par le fait que, à chaque affectation d'un nouveau pixel dans une classe, on procède au calcul d'une nouvelle valeur de la classe ($U_i$) en effectuant une moyenne arithmétique de valeurs des pixels de la classe.

9. Procédé selon l'une quelconque des revendications 1 à 8, caractérisé par le fait qu'il comporte les étapes suivantes :
   1 - à l'initialisation du procédé, le paramètre S est nul ;
   2 - on procède à une lecture du premier pixel ($P_{11}$) de l'image ;
   3 - on identifie la première classe par la valeur du premier pixel ;
   4 - on procède à un test pour savoir s'il s'agit du dernier pixel de l'image ;
   5 - s'il s'agit du dernier pixel, on procède à une sauvegarde des valeurs des pixels et des valeurs des classes créées ;
   6 - fin de traitement et transmission du signal comprimé pour reconstituer l'image ;
   7 - s'il ne s'agit pas du dernier pixel, on lit le pixel suivant ($P_{m,n}$) ;
   8 - on recherche la valeur d'une classe ($U_i$) déjà créée la plus proche par le calcul de la distance d ($U_i$, $P_{m,n}$) ;
   9 - on procède à une comparaison entre cette distance d et le paramètre S ;
   10 - si d est inférieur ou égal à S, on introduit le pixel dans la classe la plus proche ($U_i$) et on recalcule la valeur de cette classe ;

11 - si d est supérieur à S, on crée une nouvelle classe, on teste pour savoir si le nombre de classes déjà créées est supérieur ou égal au nombre prédéterminé ($2^K$) ;

12 - si le nombre de classes est inférieur au nombre prédéterminé ($2^K$), on crée une nouvelle classe, dont la valeur est celle du pixel lu ($P_{m,n}$) et on réitère à partir de la 4ème étape ;

13 - si le nombre de classes est égal au nombre prédéterminé ($2^K$), on incrémente le paramètre S, tel que S = S + j ;

14 - on effectue une mise à zéro du nombre de classes créées et on réitère à partir de la 2ème étape.

10. Dispositif de compression d'image numérique pour la mise en oeuvre du procédé selon l'une quelconque des revendications 1 à 9, ledit dispositif, comportant des moyens pour délivrer un signal numérique d'image représentant un codage numérique des pixels constituant l'image, est caractérisé par le fait qu'il comprend un organe de traitement (1) qui reçoit le signal numérique d'image (SI), et qui délivre un signal numérique d'image comprimé C, chaque pixel étant codé sur K bits et un signal numérique T correspondant au codage sur B bits du nombre prédéterminé $2^K$ de classes ; une mémoire d'image (2) de volume M x N x K bits dans laquelle sont stockées les données du signal C et une mémoire de transcodage (3) dont le volume est $2^K$ x B bits ; un convertisseur numérique-analogique (4) qui reçoit le signal de la mémoire de transcodage et le transforme en signal analogique qui est visualisé sur un écran (5).

**Claims**

1. A method for compressing digital pictures, the picture being constituted by a plurality of pixels, the method consisting in classifying the pixels in classes ($U_i$), the number ($2^K$) of classes being predetermined, characterized in that the borderline of any class is defined by a common parameter S and that the method consists in testing each pixel in order

   - to range it in a class which has already been established, if the pixel belongs to such a class,
   - in the contrary case, where it does not belong to a class which already been established,
     . to create a class as long as the number of established classes is not equal to the predetermined number ($2^K$),
     . or to increment the parameter S, thus modifying the border lines of the classes, then to test again the pixels which have been tested before in order to reclassify them in the modified classes, if the number of classes which have already been established is equal to the predetermined number ($2^K$).

2. A method according to claim 1, characterized in that the values of the classes are obtained from radiometric values of the corresponding pixels and are stored in view of being used for the reconstitution of the picture.

3. A method according to one of the preceding claims, characterized in that the parameter S is nil at the start-up of the method and that the value of the first picture pixel allows to identify a first class.

4. A method according to claim 1, characterized in that a pixel is allocated to a given class if the distance d with this class is shorter than the running parameter S.

5. A method according to claim 1, characterized in that the read-out of a pixel triggers the establishment of a new class, if the distance d with the closest class exceeds or is equal to the running parameter S and if the predetermined number of classes has not yet been achieved.

6. A method according to claim 1, characterized in that the read-out of a pixel triggers an incrementation of the parameter S by a value j and a return to zero of the number of established classes, if the distance d with the closest class exceeds the parameter S prior to the incrementation and if the predetermined number of classes has been achieved.

7. A method according to claim 2, characterized in that, if a new class is created, the value allocated to a class is identical to the value ($P_{m,n}$) of the pixel having been read out.

8. A method according to claim 2, characterized in that at each allocation of a new pixel to a class, a new value of the class ($U_i$) is calculated by creating the arithmetic mean value of the pixels of the class.

9. A method according to any one of claims 1 to

8, characterized in that it comprises the following method steps:

1 - at the initialisation of the method, the parameter S is nil,

2 - the first pixel ($P_{11}$) of the picture is read out,

3 - the first class is identified by the value of the first pixel,

4 - a test is performed in order to learn if the present pixel is the last pixel of the picture,

5 - if it is the last pixel, the values of the pixels and the values of the established classes are stored,

6 - end of processing and transmission of the compressed signal in order to reconstitute the picture,

7 - if it is not the last pixel, the next pixel ($P_{m,n}$) is read out,

8 - the closest value of a class ($U_i$) which has already been established is searched by calculating the distance d ($U_i$, $P_{m,n}$),

9 - this distance d is compared to the parameter S,

10 - if d does not exceed S, the pixel is allocated to the closest class ($U_i$) and the value of this class is recalculated,

11 - if d exceeds S, a new class is created and it is tested, if the number of already established classes is equal to or exceeds the predetermined number ($2^K$),

12 - if the number of classes is smaller than the predetermined number ($2^K$), a new class is created whose value is that of the read-out pixel ($P_{m,n}$), and the method begins again at the fourth step,

13 - if the number of classes is equal to the predetermined number ($2^K$), the parameter S is incremented such that S = S + j, 14 - the number of created classes is set to zero and the method begins again with the second step.

10. A device for compressing a digital picture by implementing the method according to any one of claims 1 to 9, the device comprising means for supplying a digital picture signal representing a digital encoding of the pixels which constitute the picture, is characterized in that it comprises a processor unit (1) receiving the digital picture signal (SI) and supplying a compressed digital picture signal C, each pixel being encoded by K bits, and a digital signal T corresponding to the encoding of the predetermined number $2^K$ of classes by B bits, a picture memory (2) having a capacity of M x N x K bits and intended to store the data of the signal C, and a transcoder memory (3) whose capacity is $2^K$ x B bits, a digital-to-analog converter (4) receiving the signal of the transcoding memory and converting it into an analog signal which is displayed on a screen (5).

**Patentansprüche**

1. Verfahren zur Kompression eines digitalen Bilds, das von einer Vielzahl von Bildpunkten gebildet wird, wobei das Verfahren darin besteht, die Bildpunkte in Klassen ($U_i$) zu ordnen, deren Anzahl ($2^K$) vorbestimmt ist, dadurch gekennzeichnet, daß die Grenze jeder Klasse durch einen gemeinsamen Parameter S definiert ist und daß das Verfahren darin besteht, jeden Bildpunkt zu testen, um

- ihn in einer bereits gebildeten Klasse einzuordnen, wenn er einer solchen Klasse angehört,
- im gegenteiligen Fall, wenn er nicht einer bereits gebildeten Klasse angehört,
  . entweder eine Klasse zu erzeugen, solange die Anzahl der bereits gebildeten Klassen eine vorbestimmte Anzahl ($2^K$) nicht erreicht hat,
  . oder den Parameter S zu inkrementieren und somit die Grenzen der Klassen zu modifizieren, dann erneut die bereits getesteten Bildunkte zu testen, um sie in den modifizierten Klassen unterzubringen, wenn die Anzahl der bereits gebildeten Klassen der vorgegebenen Anzahl ($2^K$) gleicht.

2. Verfahren nach Anspruch 1, dadurch gekennzeichnet, daß die Werte der Klassen ausgehend von radiometrischen Werten der Bildpunkte, die sie bilden, erhalten werden und für ihre Verwendung bei der Rekonstitution des Bilds gespeichert werden.

3. Verfahren nach einem der vorhergehenden Ansprüche, dadurch gekennzeichnet, daß der Parameter S bei Beginn des Verfahrens Null ist und daß der Wert des ersten Bildpunkts eine erste Klasse zu identifizieren vermag.

4. Verfahren nach Anspruch 1, dadurch gekennzeichnet, daß ein Bildpunkt einer gegebenen Klasse zugeordnet wird, sofern der Abstand d mit dieser Klasse geringer als der augenblickliche Parameter S ist.

5. Verfahren nach Anspruch 1, dadurch gekennzeichnet, daß das Auslesen eines Bildpunkts die Erzeugung einer neuen Klasse auslöst, sofern der Abstand d mit der nächstliegenden Klasse größer oder gleich dem augenblickliche Parameter S ist und die vorbestimmte Anzahl von Klassen noch nicht erreicht ist.

6. Verfahren nach Anspruch 1, dadurch gekennzeichnet, daß das Auslesen eines Bildpunkts eine Inkrementierung des Parameters S um einen Wert j und eine Nullsetzung der Anzahl erzeugter Klassen auslöst, sofern der Abstand d mit der nächstliegenden Klasse größer als der Parameter S vor der Inkrementierung war und die vorbestimmte Anzahl von Klassen erreicht ist.

7. Verfahren nach Anspruch 2, dadurch gekennzeichnet, daß bei der Bildung einer neuen Klasse der ihr zugeordnete Wert gleich dem Wert ($P_{m,n}$) des gelesenen Bildpunkts ist.

8. Verfahren nach Anspruch 2, dadurch gekennzeichnet, daß bei jeder Zuordnung eines neuen Bildpunkts zu einer Klasse ein neuer Wert der Klasse ($U_i$) berechnet wird, indem die Werte der Bildpunkte der Klasse arithmetisch gemittelt werden.

9. Verfahren nach einem beliebigen der Ansprüche 1 bis 8, dadurch gekennzeichnet, daß es folgende Schritte aufweist:

1 - Start des Verfahrens, der Parameter S ist Null,

2 - Auslesen des ersten Bildpunkts ($P_{11}$),

3 - Identifikation der ersten Klasse durch den Wert des ersten Bildpunkts,

4 - Überprüfung, ob es sich um den ersten Bildpunkt handelt,

5 - Absicherung der Werte der Bildpunkte und der Werte der gebildeten Klassen, wenn es sich um den letzten Bildpunkt handelt,

6 - Ende der Verarbeitung und Übertragung des komprimierten Signals für die Bildkonstitution,

7 - Auslesen des nächsten Bildpunkts ($P_{m,n}$), sofern es sich nicht um den letzten Bildpunkt handelt,

8 - Suche nach dem Wert einer bereits gebildeten nächstliegenden Klasse ($U_i$) durch Berechnung des Abstands d ($U_i$, $P_{m,n}$),

9 - Vergleich zwischen diesem Abstand d und dem Parameter S

10 - Einordnung des Bildpunkts in die nächstliegende Klasse ($U_i$) und erneute Berechnung des Werts dieser Klasse, wenn d kleiner oder gleich S ist,

11 - Erzeugung einer neuen Klasse und Überprüfung, ob die Anzahl von bereits gebildeten Klassen größer oder gleich einer vorgegebenen Zahl ($2^K$) ist, wenn d größer als S ist,

12 - Erzeugung einer neuen Klasse, deren Wert gleich dem des gelesenen Bildpunkts ($P_{m,n}$) ist, und Wiederholung ausgehend vom vierten Verfahrensschritt, wenn die Anzahl von Klassen unter der vorgegebenen Zahl ($2^K$) ist,

13 - Inkrementierung des Parameters S, so daß sich ergibt S = S + j, wenn die Anzahl von Klassen der vorbestimmten Anzahl ($2^K$) gleicht,

14 - Nullsetzung der Anzahl von gebildeten Klassen und Wiederholung ausgehend vom zweiten Verfahrensschritt.

10. Vorrichtung zur Kompression eines digitalen Bilds zur Durchführung des Verfahrens nach einem beliebigen der Ansprüche 1 bis 9, wobei die Vorrichtung Mittel zur Ausgabe eines digitalen Bildsignals aufweist, das eine digitale Kodierung der das Bild bildenden Bildpunkte darstellt, dadurch gekennzeichnet, daß die Vorrichtung ein Verarbeitungsorgan (1), das das digitale Bildsignal (SI) empfängt und ein komprimiertes digitales Bildsignal C, bei dem jeder Bildpunkt mit K Bits kodiert ist, und ein digitales Signal T liefert, das der Kodierung der vorgegebenen Anzahl $2^K$ von Klassen mit Hilfe von B Bits entspricht, einen Bildspeicher (2) einer Kapazität M x N x K Bits, in dem die Daten des Signals C gespeichert sind, und einen Transkodierspeicher (3), dessen Kapazität $2^K$ x B Bits beträgt, und einen Digital-Analog-Wandler (4) aufweist, der das Ausgangssignal des Transkodierspeichers empfängt und es in ein Analogsignal zur Anzeige auf einem Bildschirm (5) umwandelt.

FIG_1

# FIG_2 ✓